# EUROPEAN PATENT APPLICATION

(11) **EP 1 119 208 A2**
(43) Date of publication of application: **25.07.2001**
(21) Application number: 00403672.9
(22) Date of filing: 26.12.2000
(51) Int. Cl.: H04N 9/79

(54) **Digital video recorder with several video sources and multiplexer for such a digital video recorder**

(30) Priority: 07.01.2000 EP 00400028; 23.02.2000 EP 00400492
(71) Applicant: THOMSON multimedia, 92100 Boulogne Billancourt (FR)
(72) Inventor: Dumont, Frank, 92100 Boulogne Billancourt (FR); Tan, Chee Lam, 92100 Boulogne Billancourt (FR)
(74) Representative: Bonnans, Arnaud

(57) **Abstract**

A digital video recorder has an analog source (12) and at least a digital source (14). The analog source is encoded by an encoder (16). A multiplexer (18) is connected to both the encoder (16) and the digital source (14). The multiplexer (18) is also connected to a medium interface (20) for recording and reading on a medium and to a digital decoder (22) linked to a display (25).

This construction allows the video recorder to record and monitor independently any of the sources (12, 14).

## Description

The invention relates to digital video recorders, like for instance a digital Video Cassette Recorder (digital VCR) and to a multiplexer for such video recorders.

Digital video recorders are apparatuses which allow to record a video signal coded digitally on a medium, for instance a magnetic medium (magnetic tape or disk) or an optical medium (optical disk). These apparatuses generally also have the ability to read the medium in order to play the video signal back once decoded.

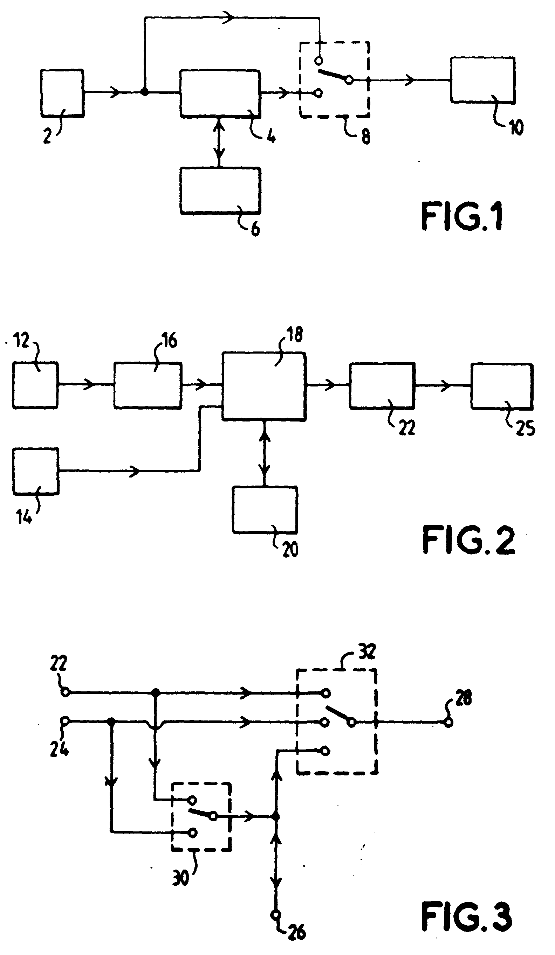

Such an apparatus is conventionally built according to figure 1. Though the video signal is to be digitally recorded, an analog source 2 (like an analog tuner receiving an analog signal on an antenna) is still widely used. The analog signal from the analog source 2 is sent on the one hand to a switch 8 for display and to a digital encoder and decoder 4 to convert it into a digital stream. The digital stream is then sent to a medium interface 6 via a bi-directional link. The medium interface 6 records the digital stream on the medium (record mode : REC).

The medium interface 6 can also read the digital stream from the medium (play-back mode : PB). The digital stream is then sent to the digital encoder and decoder 4 via the bi-directional link. The digital encoder and decoder 4 ouputs an analog signal corresponding to the digital stream to the switch 8.

As mentioned above, the switch 8 has two inputs : a first input from the analog source (*e.g*. tuner) and a second input from the digital encoder and decoder 4. The switch 8 has one output directed to a display 10. When the video recorder is in the REC mode, the switch 8 connects the analog source directly to the display 10, so that the user can see on the display 10 what he is recording. When the video recorder is in the PB mode, the switch 8 connects the digital encoder and decoder 4 to the display so that the user can see on the display 10 the video signal which is read from the medium.

However this system does not provide easy connection of a digital source (e.g. a digital tuner) and therefore lacks flexibility. The invention seeks to provide a more flexible system for a digital video recorder, which makes it possible to connect a digital source. Preferably, the video recorder would record one source and display another one independantly.

The invention proposes a digital video recorder comprising :
- an encoder of a first analog signal into a first digital stream ;
- a decoder of a second digital stream into a second analog signal;
- a medium interface for reading and recording on a medium ;
wherein at least one digital source outputs a third digital stream, and wherein a multiplexer is connected to the encoder, to the decoder, to the digital source and to the medium interface.

According to further features of the invention,
- the multiplexer comprises a first switch, which allows to connect selectively the medium interface to the encoder or to the digital source, and a second switch, which allows to connect selectively the decoder to the encoder or to the digital source ;
- the second switch allows to connect selectively the decoder to the encoder, to the digital source or to the medium interface ;
- a transcoder receiving a fourth digital stream is connected to the multiplexer;
- the multiplexer comprises a first switch, which allows to connect selectively the medium interface to the encoder, to the digital source or to the transcoder, and a second switch, which allows to connect selectively the decoder to the encoder, to the digital source or to the transcoder;
- the second switch allows to connect selectively the decoder to the encoder, to the digital source, to the transcoder or to the medium interface ;
- the decoder is connected to a display.

According to this inventive concept, a digital video recorder comprises:
- a digital encoder;
- a digital decoder;
- a medium interface for reading and recording on a medium ;
and a multiplexer is connected to the digital encoder, to the digital decoder and to the medium interface and has at least an input for receiving a digital stream from a digital source.

Preferably, the multiplexer comprises a first switch, which allows to connect selectively the medium interface to the digital encoder or to said input, and a second switch, which allows to connect selectively the digital decoder to the digital encoder or to said input.

The invention also proposes a multiplexer for a digital video recorder with at least two inputs for receiving each a digital stream, with a point for connection to a medium interface and with at least one output, wherein a first switch selectively connects said point to one of the inputs and wherein a second switch selectively connects the output to one of the inputs or to said point.

The invention will now be explained in the light of the attached drawings and more specifically :
- figure 1 representing a conventional structure of a digital video recorder as already described ;
- figure 2 representing the main elements of a first embodiment of the invention ;
- figure 3 being a detailed diagram of the multiplexer of figure 2 ;
- figure 4 representing a second embodiment of the invention.
- figure 5 represents an additional possibility for the solution of figure 4.

A digital video recorder whose main elements are represented on figure 2 comprises an analog source 12 and a digital source 14. The analog source 12 is generally an analog tuner receiving analog video signals from a remote emitter through an antenna. The analog source 12 could also be for instance the output of a conventional analog VCR.

The digital source 14 can be a digital tuner receiving from an antenna or a cable-link a video signal which is digitally coded for transmission, for instance according to the MPEG-II format. This kind of digitally coded signals (or digital streams) is already widely used for video signals received from satellites and should become used in the coming years even for terrestrial communications (new HDTV standards). Another example of a digital source 14 is a hard-disk drive (HDD).

A digital encoder 16 receives the analog signal from the analog source 12 and outputs a digital stream, for instance coded according to the MPEG-II format. The main steps which are achieved by the digital encoder 16 are converting the analog signal into a digital signal (notably through sampling of the analog signal), processing the digital signal (notably separating of luminance and chrominance, which are generally mixed together in the analog signal, to obtain a so-called YUV signal) and coding ( (and possibly compressing) the digital signal according to a given format.

The digital streams from the digital source 14 and from the digital encoder 16 are coded according to the same format, which may be for instance the widely-used MPEG-II format. The digital encoder 16 on the one hand and the digital source 14 on the other hand are connected to two distinct inputs of a multiplexer 18.

The multiplexer 18 is also connected via a bi-directional link to a medium interface 20. The medium interface 20 is able to convert the coded digital stream into a bit stream to record it on a medium. For instance, in a digital VCR, the medium interface 20 comprises a drum carrying magnetic heads in order to record the bit stream on a magnetic tape according to the D-VHS format. In the reverse way, the medium interface 20 can read a bit stream from the pre-recorded medium and convert it into a digital stream coded according to a specific format, like MPEG-II, and output the digital stream on the bi-directional link.

An output of the multiplexer 18 is connected to a digital decoder 22. The digital decoder 22 is able to convert a coded digital stream (for instance a MPEG-II stream) into an analog signal to be displayed on a display 25. The main steps of this conversion are decoding the coded digital stream (e.g. MPEG-II) into a non-coded (and hence non-compressed) digital signal (e.g. a YUV signal) and then generating an analog signal (digital-to-analog conversion). The analog signal output from the digital decoder 22 can be for instance of the CVBS-type, of the S-Video type or of the RGB-type and is sent to a display 10, for instance a television set.

The multiplexer 18 whose constitution will be detailed below allows to record and display independently any of the video signals from the analog source 12 and the digital source 14. Of course, it also allows to display a pre-recorded video signal.

As can be seen from figure 3 and as already explained, the multiplexer 18 has two separate inputs 22, 24 for receiving each a coded digital video stream. The input 22 is connected to the output of the digital encoder 16 and the input 24 is connected to the output of the digital source 14. The multiplexer 18 has an output 28 connected to the digital decoder 22. The multiplexer 18 is also connected at point 26 to the medium interface 20 via the bi-directional link.

The multiplexer 18 comprises a first switch 30 and a second switch 32. The first switch 30 allows to selectively link point 26 to input 22 or to input 24. The first switch 30 consequently allows to choose which video signal (among video signal from the analog source 12 and video signal from the digital source 14) should be sent to the medium interface 20 for recording.

The second switch 32 allows to selectively connect output 28 to input 22, to input 24 or to point 26. The second switch 32 thus allows to choose which video signal is to be decoded in decoder 22 and displayed on display 25 among video signal from the analog source 12 (input 22) and video signal from the digital source 14 (input 24), independently of the possible recording of one of these signals. The second switch 32 also allows to display a pre-recorded signal read from the medium interface 20 during play-back (point 26).

An example of how the structure described above can be used will now be given.

If the user wants to record the video signal from the analog source 12, the first switch 30 will connect the input 22 to point 26. The analog signal from the analog source 12 will be digitally coded (and compressed) by the digital encoder 16 and then transmitted to the medium interface 20 for recording on the medium via input 22, switch 30 and point 26.

The user will then be able to choose to watch the video signal from analog source 12 which is recorded at the same time or to watch the video signal from digital source 14 (while the video signal from the analog source 12 is digitally recorded as explained above). If he chooses to watch the video signal from digital source 14, the second switch 32 will connect output 28 to input 24. The video signal from digital source 14 will thus be sent to the display 25 through the digital decoder 22.

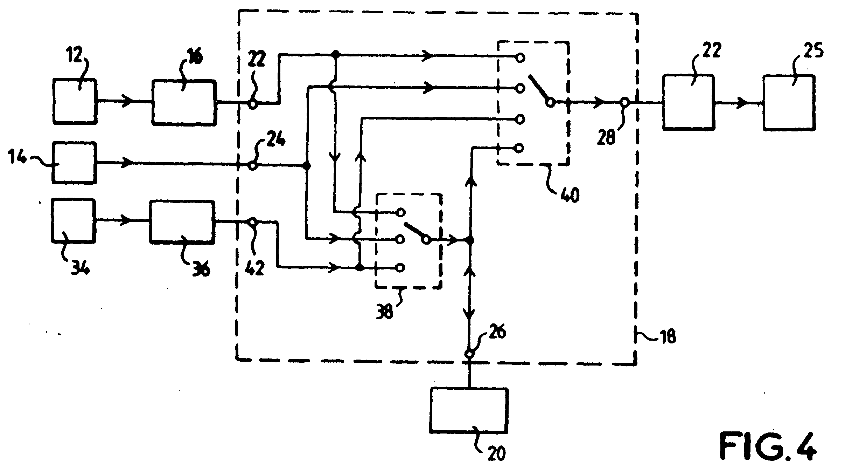

Another embodiment of the invention is represented on figure 4. The elements of this embodiment which are identical to those of the previous embodiment (figures 2 and 3) will have the same reference number and will not be described once again.

The embodiment of figure 4 uses another source 34, here a digital video source, which is for instance a digital camcorder according to the DV standard. The video recorder comprises a transcoder 36 which allows to convert the digital signal from the digital video source 34 (DV standard) into a digital stream using the same standard as the digital source 14 and the encoder 16, typically MPEG-II.

The multiplexer 18 has an input 42 connected to the transcoder 36. The multiplexer 18 comprises a first switch 38, similar to the switch 30 of figure 3 with one more input connected to the transcoder 36 via input 42, and a second switch 40, similar to switch 32 of figure 3 with one more input connected to the transcoder 36 via input 42.

The video recorder of figure 4 operates similarly to the video recorder of figure 3, with the possibility to choose among 3 sources instead of 2, and still to record one source and to watch another one on the display 25.

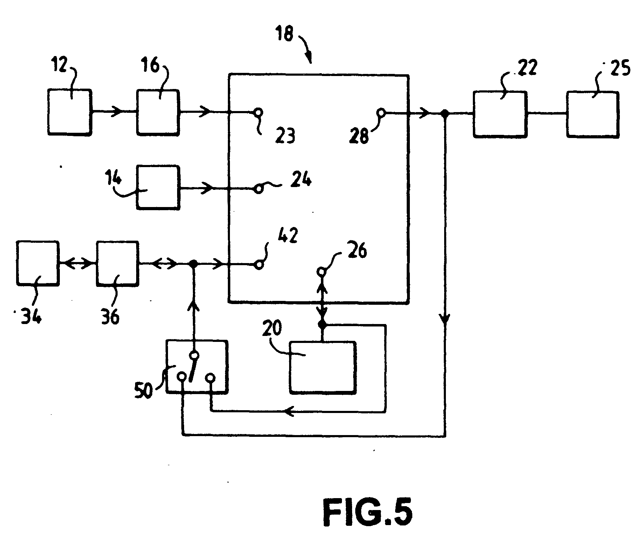

An additional possibility is represented at figure 5. Compared to the solution of figure 4, point 26 and output 28 are connected to two respective inputs of a record switch 50. The record switch 50 has an output connected to the transcoder 36, for instance via a bi-directional link also used for connection with point 42.

The record switch 50 allows to select which video signal is to be recorded on the digital video source 34 (when recording is possible, as with a camcorder), either video signal from the medium interface 20 (video signal reproduced from a tape) or video signal sent for display (analog source or digital source). Thanks to the provision of the record switch 50, the preceding advantages are maintained, even when recording on the digital video source 34.

The solution of the invention is thus very flexible as it applies to any number of sources as far as the number of inputs of switches 30, 32 is adapted and provided every source is converted into a common digital stream standard.

## Claims

1. Digital video recorder comprising :
- an encoder (16) of a first analog signal into a first digital stream ;
- a decoder (22) of a second digital stream into a second analog signal;
- a medium interface (20) for reading and recording on a medium ;
characterised in that at least one digital source (14, 36) outputs a third digital stream, and in that a multiplexer (18) is connected to the encoder (16), to the decoder (22), to the digital source (14, 36) and to the medium interface (20).

2. Digital video recorder according to claim 1, wherein the multiplexer (18) comprises a first switch (30, 38), which allows to connect selectively the medium interface (20) to the encoder (16) or to the digital source (14, 36), and a second switch (32, 40), which allows to connect selectively the decoder (22) to the encoder (16) or to the digital source (14, 36).

3. Digital video recorder according to claim 2, wherein the second switch (32, 40) allows to connect selectively the decoder (22) to the encoder (16), to the digital source (14, 36) or to the medium interface (20).

4. Digital video recorder according to any of the preceding claims wherein a transcoder (36) receiving a fourth digital stream is connected to the multiplexer (18).

5. Digital video recorder according to claim 4, wherein the multiplexer comprises a first switch (38), which allows to connect selectively the medium interface to the encoder (16), to the digital source (14) or to the transcoder (36), and a second switch (40), which allows to connect selectively the decoder (22) to the encoder (16), to the digital source (14) or to the transcoder (36).

6. Digital video recorder according to claim 5, wherein the second switch (40) allows to connect selectively the decoder (22) to the encoder (16), to the digital source (14), to the transcoder (36) or to the medium interface (20).

7. Digital video recorder according to any of the preceding claims, wherein the decoder (22) is connected to a display (25).

8. Digital video recorder comprising :
- a digital encoder (16);
- a digital decoder (22);
- a medium interface (20) for reading and recording on a medium ;
characterised in that a multiplexer (18) is connected to the digital encoder (16), to the digital decoder (22) and to the medium interface (20) and in that the multiplexer (18) has at least an input (24, 42) for receiving a digital stream from a digital source (14, 36).

9. Digital video recorder according to claim 8, wherein the multiplexer (18) comprises a first switch (30, 38), which allows to connect selectively the medium interface (20) to the digital encoder (16) or to said input (24, 42), and a second switch (32, 40), which allows to connect selectively the digital decoder (22) to the digital encoder (16) or to said input (24, 42).

10. Multiplexer for a digital video recorder with at least two inputs (22, 24, 42) for receiving each a digital stream, with a point (26) for connection to a medium interface (20) and with at least one output (28), wherein a first switch (30, 38) selectively connects said point (26) to one of the inputs (22, 24, 42) and wherein a second switch (32, 40) selectively connects the output (28) to one of the inputs (22, 24, 42) or to said point (26).
